# FASCICULE DE BREVET EUROPEEN

(11) **EP 0 781 692 B1**
(45) Date de publication et mention de la délivrance du brevet: **21.03.2001**
(21) Numéro de dépôt: 96120756.0
(22) Date de dépôt: 20.12.1996
(51) Int. Cl.: B60S 1/34

(54) **Mécanisme d'essuie-glace comportant des moyens perfectionnés de guidage et d'étanchéité pour la traversée d'une tôle par un arbre d'entraînement**
Scheibenwischer-Mechanismus mit Führungs-und Dichtungsmittel zur Antriebaxen-Durchquerung eines Bleches
Windscreen wiper mechanism with guiding and sealing means for a drive shaft passing through a sheet

(30) Priorité: 27.12.1995 FR 9515522
(43) Date de publication de la demande: 02.07.1997
(73) Titulaire: VALEO SYSTEMES D'ESSUYAGE, 78321 La Verrière (FR)
(72) Inventeur: Gorce, Stéphane, 86100 Chatellerault (FR)
(74) Mandataire: Kohn, Philippe

(56) Documents cités:
- EP-A- 0 635 651
- FR-A- 2 142 099
- FR-A- 2 216 792

## Description

La présente invention concerne un mécanisme d'essuie-glace.

L'invention concerne plus particulièrement un mécanisme d'essuie-glace comportant un arbre d'entraînement en rotation d'un bras d'essuie-glace qui traverse une ouverture formée dans une tôle du véhicule automobile équipé de cet essuie-glace avec interposition d'un dispositif de guidage et d'étanchéité.

Selon une conception connue, le dispositif de guidage et d'étanchéité comprend un fût de guidage en rotation de l'arbre d'essuie-glace qui s'étend à travers l'ouverture de la carrosserie, dont une collerette radiale s'étend en regard de la face interne de la tôle avec interposition d'un joint annulaire interne d'étanchéité, le fût ayant son extrémité libre qui fait saillie axialement au regard de la face externe de la tôle comporte un filetage sur lequel est monté vissé un écrou de serrage dont la face radiale de serrage coopère avec la face externe de la tôle avec interposition d'un joint annulaire externe d'étanchéité.

Cette conception permet d'assurer un guidage en rotation de l'arbre d'entraînement de l'essuie-glace dans le fût, au niveau de sa traversée de la tôle de la carrosserie, tout en assurant une bonne étanchéité de l'ouverture formée dans la tôle à cet effet, évitant ainsi toute pénétration intempestive d'eau à l'intérieur du véhicule.

On constate toutefois que la conception proposée dans cette étape de la technique faisant appel à deux joints d'étanchéité augmente le nombre de composants et complique leur montage, la mise en place correcte des joints d'étanchéité étant notamment un critère déterminant pour la qualité de l'étanchéité à obtenir.

Par ailleurs, il est souhaitable d'isoler élastiquement au maximum les mécanismes d'essuie-glace par rapport à la structure de la caisse du véhicule en interposant des dispositifs d'amortissement au niveau des différents dispositifs de fixation et de montage du mécanisme sur le véhicule.

La présente invention a pour but de proposer un mécanisme d'essuie-glace mentionné précédemment, dont la conception des moyens d'étanchéité soit particulièrement simple et qui permet aussi de limiter la transmission des vibrations.

Dans ce but, l'invention propose un mécanisme d'essuie-glace du type comportant un arbre d'entraînement en rotation d'un bras d'essuie-glace qui traverse une ouverture formée dans une tôle du véhicule avec interposition d'un dispositif de guidage et d'étanchéité qui comprend un fût de guidage en rotation de l'arbre de l'essuie-glace qui s'étend à travers l'ouverture, dont une collerette radiale s'étend en regard de la face interne, ou respectivement externe, de la tôle avec interposition d'un joint annulaire interne, ou respectivement externe, d'étanchéité, le fût ayant son extrémité libre qui fait saillie axialement au-delà de la face externe, ou respectivement interne, de la tôle et qui comporte un filetage sur lequel est monté vissé un écrou de serrage dont la face radiale de serrage coopère avec la face externe, ou respectivement interne, de la tôle avec interposition d'un joint annulaire externe, ou respectivement interne, d'étanchéité (Mécanisme du type divulgué, par exemple, dans FR-A-2 142 099), caractérisé en ce que le joint annulaire externe est réalisé venu de matière en une seule pièce avec le joint annulaire interne, et en ce que le joint unique d'étanchéité est introduit axialement à travers l'ouverture, avant le serrage axial de l'ensemble au moyen de l'écrou de serrage.

Selon des modes de réalisation de l'invention :
- le joint unique d'étanchéité est introduit axialement à travers l'ouverture depuis la face interne, ou respectivement externe, de la tôle ;
- le joint unique d'étanchéité comporte un talon annulaire interne, ou respectivement externe, interposé entre la collerette radiale du fût de guidage et la face interne, ou respectivement externe, de la tôle et un manchon cylindrique réalisé venu de matière qui s'étend depuis la face supérieure, ou respectivement inférieure, annulaire du talon, à travers l'ouverture de la tôle, et qui, en position serrée de l'ensemble, est comprimé axialement par l'écrou pour constituer un joint externe, ou respectivement interne, annulaire d'étanchéité agencé entre le corps cylindrique du fût et l'ouverture de la tôle ;
- en position serrée, le tronçon d'extrémité du manchon qui s'étend axialement au-delà de la face externe, ou respectivement interne, de la tôle est déformé en accordéon et comporte un premier pli qui s'étend radialement au contact de la face externe, ou respectivement interne, de la tôle et un second pli qui s'étend radialement au contact de la face radiale de serrage de l'écrou et dont le bord d'extrémité libre coopère de manière étanche avec le corps cylindrique du fût de guidage ;
- le bord d'extrémité libre du manchon comporte un bourrelet d'étanchéité ;
- le diamètre intérieur du manchon est supérieur au diamètre supérieur du fût de guidage ;
- une rondelle de serrage est interposée axialement entre la face radiale de serrage de l'écrou et le joint unique d'étanchéité, et le bord radial extérieur de la rondelle est profilé pour guider le manchon lors du serrage axial ;
- le bord radial extérieur de la rondelle de serrage est profilé de manière tronconique en direction de la face externe, ou respectivement interne, de la tôle et coopère avec le bourrelet d'étanchéité du manchon ;
- une rondelle d'appui est interposée entre la collerette radiale du fût et la face en vis-à-vis du talon du joint d'étanchéité ;
- l'épaisseur axiale du talon du joint d'étanchéité lui confère une fonction d'amortisseur de vibrations interposé entre le fût de guidage et la tôle.

D'autres caractéristiques et avantages de l'invention apparaîtront mieux à la lecture de la description qui suit faite à titre d'exemple non limitatif et en référence aux dessins annexés sur lesquels :
- la figure 1 est une vue en perspective éclatée des principaux composants d'un mécanisme d'essuie-glace conforme aux enseignements de l'invention avec des moyens perfectionnés de guidage et d'étanchéité ;
- la figure 2 est une vue en section axiale qui illustre certains des composants de la figure 1 dans la position introduite axialement dans le trou de la tôle avant le serrage axial des moyens d'étanchéité et avant le montage du bras d'essuie-glace ;
- la figure 3 est une vue similaire à celle de la figure 2 qui illustre tous les composants de la figure 1 en position serrée des moyens d'étanchéité et en position montée du bras d'essuie-glace.

On a représenté sur les figures un mécanisme d'essuie-glace de conception générale connue comportant notamment un arbre 10 d'entraînement en rotation en balayage alterné, autour d'un axe géométrique X-X, d'un bras d'essuie-glace 12.

Selon une conception connue, le bras d'essuie-glace 12 comporte un perçage conique 14 qui est prévu pour être monté sur l'extrémité libre conique et cannelée 16 de l'arbre 10 sur laquelle le bras 12 est fixé par serrage axial au moyen d'un écrou 18 de serrage de la tête 20 du bras qui est monté vissé sur l'extrémité libre filetée 22 de l'arbre d'entraînement 10.

L'arbre 10 est guidé à rotation autour de l'axe X-X dans un fût de guidage 24 appartenant au corps 26 d'un palier de guidage de l'arbre 10 ou constituant le boîtier d'un ensemble motoréducteur d'entraînement de l'arbre 10.

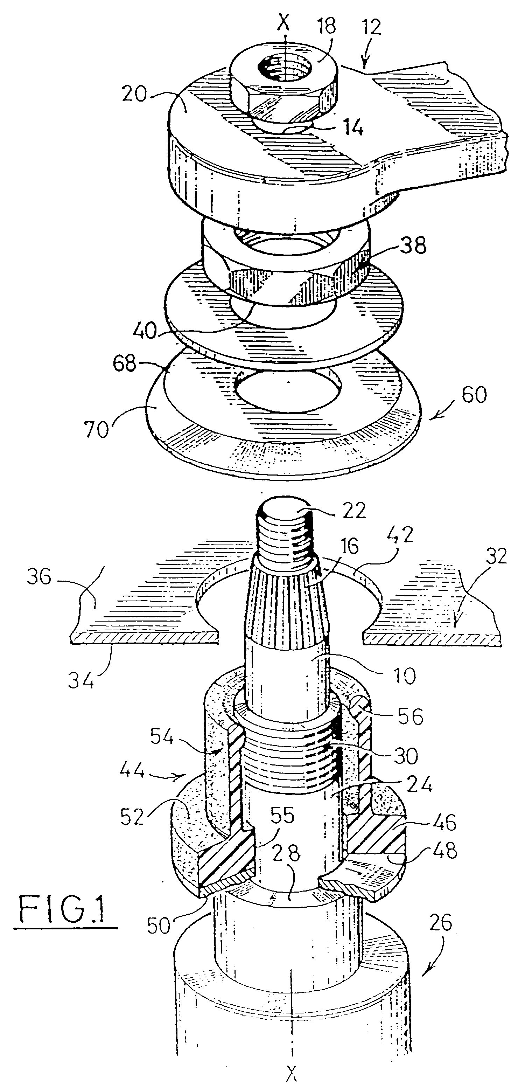

Le fût de guidage 24 est une pièce de forme cylindrique tubulaire qui est délimitée axialement par une collerette radiale annulaire 28 et dont l'extrémité libre, supérieure en considérant la figure 1, comporte un filetage extérieur 30.

Le boîtier 26 avec le fût de guidage 24 est prévu pour permettre le montage et le guidage en rotation de l'arbre d'entraînement 10 sur une tôle 32 appartenant à la carrosserie ou à un élément de structure de la caisse d'un véhicule automobile équipé du mécanisme d'essuie-glace.

La tôle 32 est délimitée par une face interne 34 tournée en vis-à-vis de la collerette 28 et par une face externe 36 qui est tournée axialement vers la partie supérieure au-dessus de laquelle s'étend un écrou 38 de serrage axial, en position montée du fût de guidage 24 sur la tôle 32.

L'écrou de serrage 38 est conçu pour être monté vissé sur le filetage 30 du fût de guidage 24 et il possède une face radiale inférieure de serrage 40 orientée en direction de la face externe 36 de la tôle 32.

Pour permettre notamment le passage du fût de guidage 24, la tôle 32 comporte une ouverture en forme de trou circulaire 42.

Afin d'assurer une bonne étanchéité au niveau de la traversée de la tôle 32, et conformément aux enseignements de l'invention, il est prévu un joint unique d'étanchéité 44.

Le joint d'étanchéité 44 comporte, à sa partie inférieure en considérant les figures, un talon annulaire massif 46 qui est délimité par une face inférieure annulaire 48 qui prend appui axialement contre la collerette d'appui 28 du fût 24 avec interposition d'une rondelle d'appui 50.

La face supérieure annulaire 52 du talon 46 est prévue pour coopérer avec la face interne 34 de la tôle 32.

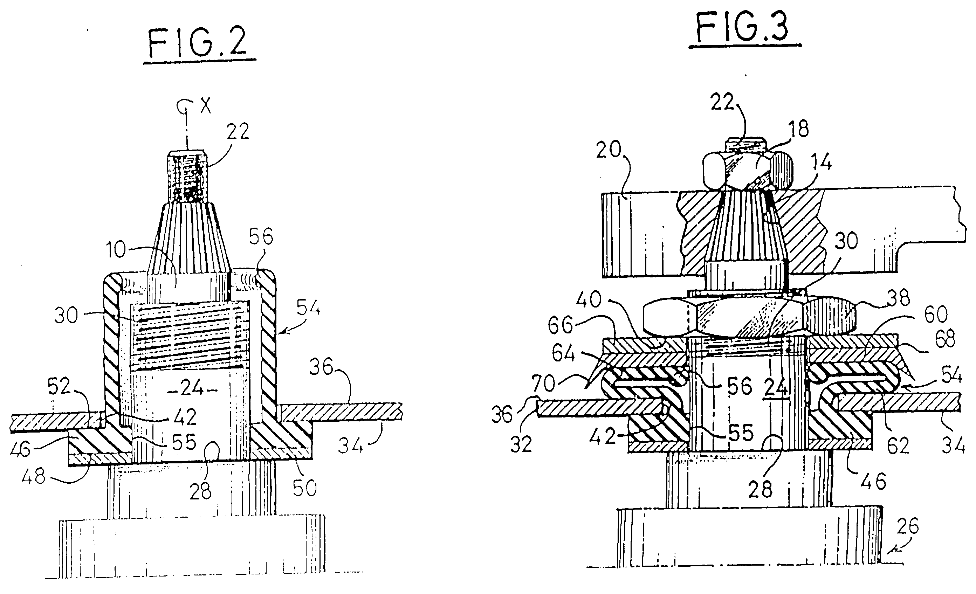

Le joint unique d'étanchéité 44 comporte également une partie supérieure qui, dans la position non serrée illustrée aux figures 1 et 2, se présente sous la forme d'un manchon cylindrique tubulaire 54 réalisé venu de matière en matériau élastomère avec le talon 46 et qui s'étend axialement depuis la face supérieure 52.

Le diamètre intérieur du manchon d'étanchéité 54 est supérieur au diamètre intérieur du trou central 55 du talon qui est lui-même sensiblement égal au diamètre supérieur du fût de guidage 24.

Le diamètre intérieur du manchon 54 est donc supérieur au fût de guidage 24 tandis que son diamètre extérieur est légèrement inférieur au diamètre du trou 42 pour permettre l'introduction axiale sans effort du manchon 54 dans le trou 42 pour occuper la position de montage illustrée à la figure 2 dans laquelle le manchon 54 s'étend axialement au-dessus de la face externe 36 de la tôle 32 et en regard du fût 24.

Au voisinage de son bord d'extrémité libre supérieure, le manchon 54 comporte un bourrelet d'étanchéité 56 qui, en section axiale, présente une section sensiblement circulaire.

Pour faciliter le serrage axial du manchon d'étanchéité 54 et sa mise en accordéon, comme cela sera expliqué par la suite, il est prévu une rondelle 60 de serrage qui est interposée axialement entre la face radiale inférieure 40 de l'écrou 38 et le joint unique d'étanchéité 44.

Lors du serrage axial des moyens d'étanchéité par l'écrou 38, et comme on peut le voir à la figure 3, le manchon d'étanchéité 54 est replié axialement en accordéon.

En position repliée, le manchon 54 comporte un premier pli 62 d'orientation radiale qui épouse de manière étanche la face supérieure externe 36 de la tôle 32 et qui se prolonge par un second pli superposé 64 qui s'étend également radialement et qui est en appui contre la face inférieure de la rondelle de serrage 60.

En position serrée, le bourrelet 56 coopère de manière étanche avec la surface cylindrique extérieure du fût de guidage 24.

Afin de ne pas entraîner de manière intempestive le manchon d'étanchéité 54 en rotation lors du serrage, une rondelle supplémentaire 66 est interposée entre l'écrou de serrage 38 et la rondelle de serrage 60.

Pour faciliter le guidage et la mise en pli en accordéon du manchon 54, le bord annulaire extérieur 68 de la rondelle de serrage 60 se prolonge par une portion annulaire de forme tronconique en forme de chanfrein 70 orienté en direction de la face externe 36 de la tôle 32.

Comme on peut le voir sur la figure 3, le joint unique d'étanchéité 54 assure une double étanchéité au niveau du trou 42 formé dans la tôle 32 et au niveau du fût de guidage 24 par le bourrelet 56 et par le léger serrage radial du trou central 55 du talon 46.

Du fait de sa grande épaisseur axiale, le talon 46 constitue également un talon d'amortissement des vibrations évitant toute transmission intempestive de cette dernière entre le mécanisme d'essuie-glace et la tôle 32.

On comprend que la mise en place des moyens d'étanchéité et d'amortissement des vibrations constitués par le joint d'étanchéité unique 54 est particulièrement aisée dans la mesure où elle se fait dans la même opération d'insertion axiale, de bas en haut en considérant les figures 1 et 2, du boîtier 26 avec le fût de guidage 24 et l'arbre d'entraînement 10, dans le trou 42.

Toutefois, l'invention n'est pas limitée à ce mode de réalisation car on comprend aisément qu'il est possible, en fonction des nécessités de montage et d'assemblage sur les différents types de véhicule, d'inverser la conception de l'élément unique d'étanchéité 44, c'est-à-dire de prévoir que son talon est situé au-dessus de la face externe 36 tandis que le manchon d'étanchéité est introduit axialement dans le trou 42 pour faire saillie axialement au-delà de la face interne 34.

L'invention n'est pas non plus limitée au guidage et à l'étanchéité d'un arbre d'entraînement mais elle trouve à s'appliquer à chaque fois que, pour le montage d'un mécanisme d'essuie-glace sur un véhicule automobile, il est nécessaire d'effectuer un positionnement dans une traversée de paroi tout en souhaitant assurer une bonne étanchéité et un amortissement des vibrations.

## Revendications

1. Mécanisme d'essuie-glace du type comportant un arbre (10) d'entraînement en rotation d'un bras (12) d'essuie-glace qui traverse une ouverture (42) formée dans une tôle (32) du véhicule avec interposition d'un dispositif de guidage et d'étanchéité qui comprend un fût de guidage (24) en rotation de l'arbre de l'essuie-glace qui s'étend à travers l'ouverture (42), dont une collerette radiale (28) s'étend en regard de la face interne (34), ou respectivement externe (36), de la tôle (32) avec interposition d'un joint annulaire interne, ou respectivement externe, d'étanchéité (46), le fût ayant son extrémité libre (30) qui fait saillie axialement au-delà de la face externe (36), ou respectivement interne (34), de la tôle (32) et qui comporte un filetage sur lequel est monté vissé un écrou de serrage (38) dont la face radiale (40) de serrage coopère avec la face externe (36), ou respectivement interne (34), de la tôle (32) avec interposition d'un joint annulaire externe, ou respectivement interne, d'étanchéité (54), caractérisé en ce que le joint annulaire externe (54) est réalisé venu de matière en une seule pièce avec le joint annulaire interne (46), et en ce que le joint unique d'étanchéité (44) est introduit axialement à travers l'ouverture (42) avant le serrage axial de l'ensemble au moyen de l'écrou de serrage (38).

2. Mécanisme d'essuie-glace selon la revendication 1, caractérisé en ce que le joint unique d'étanchéité (44) est introduit axialement à travers l'ouverture depuis la face interne (34), ou respectivement externe (36), de la tôle (32).

3. Mécanisme d'essuie-glace selon l'une des revendications 1 ou 2, caractérisé en ce que le joint unique d'étanchéité (44) comporte un talon annulaire interne (46), ou respectivement externe, interposé entre la collerette radiale (28) du fût de guidage (24) et la face interne (34), ou respectivement externe (36), de la tôle (32) et un manchon cylindrique (54) réalisé venu de matière qui s'étend depuis la face supérieure, ou respectivement inférieure, annulaire (52) du talon (46), à travers l'ouverture (42) de la tôle (32), et qui, en position serrée de l'ensemble, est comprimé axialement par l'écrou (38) pour constituer un joint externe, ou respectivement interne, annulaire d'étanchéité (54) agencé entre le corps cylindrique du fût de guidage (24) et l'ouverture de la tôle (32).

4. Mécanisme d'essuie-glace selon la revendication 3, caractérisé en ce que, en position serrée, le tronçon d'extrémité du manchon (54) qui s'étend axialement au-delà de la face externe (36), ou respectivement interne (34), de la tôle (32) est déformé en accordéon et comporte un premier pli (62) qui s'étend radialement au contact de la face externe (36), ou respectivement interne (34), de la tôle (32) et un second pli (66) qui s'étend radialement au contact de la face radiale de serrage (40) de l'écrou (36) et dont le bord d'extrémité libre (56) coopère de manière étanche avec le corps cylindrique du fût de guidage (24).

5. Mécanisme d'essuie-glace selon la revendication 4, caractérisé en ce que le bord d'extrémité libre du manchon (54) comporte un bourrelet d'étanchéité (56).

6. Mécanisme d'essuie-glace selon l'une quelconque des revendications 3 à 5, caractérisé en ce que le diamètre intérieur du manchon (54) est supérieur au diamètre supérieur du fût de guidage (24).

7. Mécanisme d'essuie-glace selon l'une quelconque des revendications précédentes, caractérisé en ce qu'une rondelle de serrage (60) est interposée axialement entre la face radiale de serrage (40) de l'écrou (38) et le joint unique d'étanchéité (44), et en ce que le bord radial extérieur (68) de la rondelle est profilé (70) pour guider le manchon (54) lors du serrage axial.

8. Mécanisme d'essuie-glace selon la revendication 7 prise en combinaison avec la revendication 5, caractérisé en ce que le bord radial extérieur de la rondelle de serrage (60) est profilé de manière tronconique (70) en direction de la face externe (66), ou respectivement interne, de la tôle (32) et coopère avec le bourrelet d'étanchéité (56) du manchon (54).

9. Mécanisme d'essuie-glace selon l'une quelconque des revendications 3 à 8, caractérisé en ce qu'une rondelle d'appui (50) est interposée entre la collerette radiale (28) du fût de guidage (24) et la face en vis-à-vis (48) du talon (46) du joint d'étanchéité (44).

10. Mécanisme d'essuie-glace selon l'une quelconque des revendications 2 à 9, caractérisé en ce que l'épaisseur axiale du talon (46) du joint d'étanchéité (44) lui confère une fonction d'amortisseur de vibrations interposé entre le fût de guidage (24, 26) et la tôle (32).

## Patentansprüche

1. Scheibenwischermechanismus, umfassend eine Drehantriebswelle (10) für einen Scheibenwischerarm (12), die durch eine in einem Blech (32) des Fahrzeugs ausgebildete Öffnung (42) unter Einfügung einer Führungs- und Dichtungsvorrichtung hindurchgeht, die einen Führungsschaft (24) zur Drehführung der Wischerwelle umfaßt, der sich durch die Öffnung (42) hindurch erstreckt und von dem sich ein radialer Kragen (28) gegenüber der Innenfläche (34) bzw. Außenfläche (36) des Blechs (32) unter Einfügung eines inneren bzw. äußeren Dichtungsrings (46) erstreckt, wobei das freie Ende (30) des Schaftes, das jenseits der Außenfläche (36) bzw. Innenfläche (34) des Blechs (32) axial vorsteht, ein Gewinde umfaßt, auf dem eine Klemmutter (38) aufgeschraubt ist, deren radiale Klemmfläche (40) mit der Außenfläche (36) bzw. Innenfläche (34) des Blechs (32) unter Einfügung eines äußeren bzw. inneren Dichtungsrings (54) zusammenwirkt, **dadurch gekennzeichnet,** daß der äußere Dichtungsring (54) einstückig mit dem inneren Dichtungsring (46) ausgeführt ist und daß diese einheitliche Dichtung (44) vor der axialen Einspannung der Baueinheit mittels der Klemmutter (38) axial durch die Öffnung (42) hindurch eingesetzt wird.

2. Scheibenwischermechanismus nach Anspruch 1, **dadurch gekennzeichnet,** daß die einheitliche Dichtung (44) axial durch die Öffnung von der Innenfläche (34) bzw. von der Außenfläche (36) des Blechs (32) aus eingesetzt wird.

3. Scheibenwischermechanismus nach einem der Ansprüche 1 oder 2, **dadurch gekennzeichnet,** daß die einheitliche Dichtung (44) einen zwischen dem radialen Kragen (28) des Führungsschaftes (24) und der Innenfläche (34) bzw. Außenfläche (36) des Blechs (32) eingefügten inneren bzw. äußeren ringförmigen Steg (46) und eine einstückig ausgeführte zylindrische Muffe (54) umfaßt, die sich von der ringförmigen Oberseite bzw. Unterseite (52) des Stegs (46) aus durch die Öffnung (42) des Blechs (32) hindurch erstreckt und die in der Einspannposition der Baueinheit durch die Mutter (38) axial zusammengedrückt wird, um einen äußeren bzw. inneren Dichtungsring (54) zu bilden, der zwischen dem zylindrischen Körper des Führungsschaftes (24) und der Öffnung des Blechs (32) angeordnet ist.

4. Scheibenwischermechanismus nach Anspruch 3, **dadurch gekennzeichnet,** daß in der Einspannposition das Endteilstück der Muffe (54), das sich axial jenseits der Außenfläche (36) bzw. der Innenfläche (34) des Blechs (32) erstreckt, ziehharmonikaartig verformt wird, wobei es eine erste Falte (62), die sich radial in Kontakt mit der Außenfläche (36) bzw. der Innenfläche (34) des Blechs (32) erstreckt, und eine zweite Falte (66) umfaßt, die sich radial in Kontakt mit der radialen Klemmfläche (40) der Mutter (38) erstreckt und deren freier Abschlußrand (56) dicht mit dem zylindrischen Körper des Führungsschaftes (24) zusammenwirkt.

5. Scheibenwischermechanismus nach Anspruch 4, **dadurch gekennzeichnet,** daß der freie Abschlußrand der Muffe (54) einen Dichtungswulst (56) umfaßt.

6. Scheibenwischermechanismus nach einem der Ansprüche 3 bis 5, **dadurch gekennzeichnet,** daß der Innendurchmesser der Muffe (54) größer als der obere Durchmesser des Führungsschaftes (24) ist.

7. Scheibenwischermechanismus nach einem der vorangehenden Ansprüche, **dadurch gekennzeichnet,** daß eine Klemmscheibe (60) axial zwischen der radialen Klemmfläche (40) der Mutter (38) und der einheitlichen Dichtung (44) eingefügt ist und daß der äußere radiale Rand (68) der Klemmscheibe (70) profiliert ist, um die Muffe (54) bei der axialen Einspannung zu führen.

8. Scheibenwischermechanismus nach Anspruch 7 in Kombination mit Anspruch 5, **dadurch gekennzeichnet,** daß der äußere radiale Rand der Klemmscheibe (60) in Richtung der Außenfläche (66) bzw. der Innenfläche des Blechs (32) kegelstumpfartig profiliert ist (70) und mit dem Dichtungswulst (56) der Muffe (54) zusammenwirkt.

9. Scheibenwischermechanismus nach einem der Ansprüche 3 bis 8, **dadurch gekennzeichnet,** daß eine Anpreßscheibe (50) zwischen dem radialen Kragen (28) des Führungsschaftes (24) und der gegenüberliegenden Fläche (48) des Stegs (46) der Dichtung (44) eingefügt ist.

10. Scheibenwischermechanismus nach einem der Ansprüche 2 bis 9, **dadurch gekennzeichnet,** daß die axiale Dicke des Stegs (46) der Dichtung (44) ihm die Funktion eines zwischen dem Führungsschaft (24, 26) und dem Blech (32) eingefügten Schwingungsdämpfers verleiht.

## Claims

1. Wiper mechanism of the type having a shaft (10) for rotating a wiper arm (12) which passes through an opening (42) formed in a metal sheet (32) on the vehicle with the interposing of a guidance and sealing device which comprises a barrel (24) for rotatably guiding the wiper shaft which extends through the opening (42), on which a radial collar (28) extends opposite the internal (34), or respectively external (36), face of the metal sheet (32) with the interposing of an internal, or respectively external, annular sealing joint (46), the barrel having its free end (30) projecting axially beyond the external (36), or respectively internal (34), face of the metal sheet (32) and which has a thread on which a clamping nut (38) is mounted screwed, whose radial clamping face (40) cooperates with the external (36), or respectively internal (34), face of the metal sheet (32) with the interposing of an annular external, or respectively internal, sealing joint (54), characterised in that the external annular joint (54) is produced from the same material and in a single piece with the internal annular joint (46), and in that the single sealing joint (44) is introduced axially through the opening (42), before the axial clamping of the whole by means of the clamping nut (38).

2. Wiper mechanism according to Claim 1, characterised in that the single sealing joint (44) is introduced axially through the opening from the internal (34), or respectively external (36), face of the metal sheet (32).

3. Wiper mechanism according to one of Claims 1 or 2, characterised in that the single sealing joint (44) has an internal (46), or respectively external, annular heel interposed between the radial collar (28) on the guidance barrel (24) and the internal (34), or respectively external (36), face of the metal sheet (32) and a cylindrical sleeve (54) produced in one piece with it, which extends from the top, or respectively bottom, annular face (52) of the heel (46), through the opening (42) in the metal sheet (32), and which, in the clamped position of the whole, is compressed axially by the nut (38) in order to form an external, or respectively internal, annular sealing joint (54) arranged between the cylindrical body of the barrel (24) and the opening in the metal sheet (32).

4. Wiper mechanism according to Claim 3, characterised in that, in the clamped position, the end portion of the sleeve (54) which extends axially beyond the external (36), or respectively internal (34), face of the metal sheet (32) is deformed in a concertina shape and has a first fold (62) extending radially in contact with the external (36), or respectively internal (34), face of the metal sheet (32) and a second fold (66) which extends radially in contact with the radial clamping face (40) of the nut (36) and whose free end edge (56) cooperates sealingly with the cylindrical body of the guidance barrel (24).

5. Wiper mechanism according to Claim 4, characterised in that the free end edge of the sleeve (54) has a sealing rim (56).

6. Wiper mechanism according to any one of Claims 3 to 5, characterised in that the internal diameter of the sleeve (54) is greater than the upper diameter of the guidance barrel (24).

7. Wiper mechanism according to any one of the preceding claims, characterised in that a clamping washer (60) is interposed axially between the radial clamping face (40) of the nut (38) and the single sealing joint (44), and in that the external radial edge (68) of the washer is profiled (70) so as to guide the sleeve (54) during the axial clamping.

8. Wiper mechanism according to Claim 7 taken in conjunction with Claim 5, characterised in that the radial external edge of the clamping washer (60) is profiled so as to be tapered (70) in the direction of the external (66), or respectively internal, face of the metal sheet (32) and cooperates with the sealing rim (56) on the sleeve (54).

9. Wiper mechanism according to any one of Claims 3 to 8, characterised in that an abutment washer (50) is interposed between the radial collar (28) of the barrel (24) and the opposite face (48) of the heel (46) of the sealing joint (44).

10. Wiper mechanism according to any one of Claims 2 to 9, characterised in that the axial thickness of the heel (46) of the sealing joint (44) for its part confers a vibration damping function, interposed between the guidance barrel (24, 26) and the metal sheet (32).
